# EUROPEAN PATENT SPECIFICATION

(11) **EP 2 701 449 B1**
(45) Date of publication and mention of the grant of the patent: **27.09.2017**
(21) Application number: 13166704.0
(22) Date of filing: 06.05.2013
(51) Int. Cl.: H04W 48/18

(54) **Apparatuses and methods for recovering service from rejected signaling procedure due to network failure**
Vorrichtungen und Verfahren zur Dienstwiederherstellung aus einem zurückgewiesenen Signalisierungsvorgang aufgrund von Netzwerkfehlern
Appareils et procédés de récupération d'un service de procédure de signalisation rejetée due à une défaillance d'un réseau

(30) Priority: 08.08.2012 US 201261680848 P; 18.03.2013 US 201313846015
(43) Date of publication of application: 26.02.2014
(73) Proprietor: Acer Incorporated, Taipei Hsien 221 (TW)
(72) Inventor: Cheng, Tsung-Yo, 221 Hsichih, New Taipei City (TW)
(74) Representative: 2K Patentanwälte Blasberg Kewitz & Reichel

(56) References cited:
- EP-A2- 2 475 213
- MOTOROLA: "Clarification on additional EMM cause values", 3GPP DRAFT; C1-091936, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Sophia Antipolis (France); 20090427, 27 April 2009 (2009-04-27), XP050337506, [retrieved on 2009-04-27]
- "Universal Mobile Telecommunications System (UMTS); LTE; Non-Access-Stratum (NAS) protocol for Evolved Packet System (EPS); Stage 3 (3GPP TS 24.301 version 10.7.0 Release 10)", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. 3GPP CT 1, no. V10.7.0, 1 July 2012 (2012-07-01), XP014070312,

## Description

### BACKGROUND OF THE INVENTION

### Field of the Invention

The invention generally relates to the operation of a User Equipment (UE) during a signaling procedure with a Public Land Mobile Network (PLMN), and more particularly, to apparatuses and methods for recovering service from a signaling procedure rejected with network failure.

### Description of the Related Art

With growing demand for ubiquitous computing and networking, various wireless technologies have been developed, such as the Wireless Local Area Network (WLAN) technologies, including the Wireless Fidelity (WiFi) technology, Bluetooth technology, and the Zigbee technology, etc., and also, the cellular technologies, including the Global System for Mobile communications (GSM) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA2000) technology, Time Division-Synchronous Code Division Multiple Access (TD-SCDMA) technology, Worldwide Interoperability for Microwave Access (WiMAX) technology, Long Term Evolution (LTE) technology, Time- Division LTE (TD-LTE) technology, and LTE-Advanced technology, etc.

For user convenience and flexibility, most User Equipments (UEs) (or may be referred to as Mobile Stations (MSs)) nowadays support more than one wireless technology, and most Public Land Mobile Networks (PLMNs) support multiple wireless technologies for providing wireless services to the UEs. Taking a UE supporting the GSM/GPRS/EDGE technology, the WCDMA technology, and the LTE technology for example, it may camp on a PLMN to obtain wireless services using one of the supported wireless technologies. While the UE is camped on a PLMN, it may perform signaling procedures, such as attach procedures, location update procedures, routing area update procedures, and/or tracking area update procedures, with the PLMN.

However, there are situations where the network element(s), e.g., Base Station (BS), Node-B, or others, of the PLMN in the area of the UE's location may be under maintenance, e.g., backbone environment fixing or system configuration updates. In such cases, the signaling procedure performed with the PLMN by the UE will be rejected due to network failure, and according to chapter 5 of the 3GPP TS 24.301 specification and chapter 4 of the 3GPP TS 24.008 specification, the UE will keep retrying the signaling procedure for several times with the same PLMN using the same wireless technology as it earlier used for camping on the PLMN. Unfavorably, during this time, the UE cannot obtain wireless services, and even worse, the maintenance of the network element(s) may take a long time. As a result, the user of the UE may unexpectedly experience a long break of services.

EP 2475213 A2 discloses a method for handling an MM back-off operation by properly controlling related timers and counters. Specifically, the method comprises the steps of: transmitting a request message for an MM procedure to a service network, receiving a rejection message with an MM back-off timer corresponding to the request message from the service network, and resetting an attempt counter for the MM procedure in response to the rejection message with the MM back-off timer. The MM procedure may be an Attach procedure or a Tracking Area Update procedure.

### BRIEF SUMMARY OF THE INVENTION

In order to solve the aforementioned problem, the invention proposes apparatuses and methods for a UE to recover service from a signaling procedure rejected with network failure, by performing a PLMN selection procedure with different PLMNs or with the same PLMN using different wireless technologies without retrying the signaling procedure.

In one aspect of the invention, a mobile communication device according to claim 1 is provided. The mobile communication device comprises a wireless module and a controller module. The wireless module performs wireless transmissions and receptions to and from a first Public Land Mobile Network (PLMN) and a second PLMN. The controller module performs a signaling procedure with the first PLMN using a first wireless technology via the wireless module, wherein the signaling procedure is an attach procedure, a location update procedure, a routing area update procedure, or a tracking area update procedure. According to the present invention the controller module further performs a PLMN selection procedure only for the first PLMN using a second wireless technology via the wireless module without retrying the signaling procedure with the first PLMN, in response to the signaling procedure being failed with a rejection cause indicating a network failure.

In another aspect of the invention, a method for a mobile communication device to recover service from a signaling procedure rejected with a network failure according to claim 6 is provided.

The method comprises the steps of: performing the signaling procedure with a first PLMN using a first wireless technology, wherein the signaling procedure is an attach procedure, a location update procedure, a routing area update procedure, or a tracking area update procedure. According to the present invention the method further comprises: performing a PLMN selection procedure only for the first PLMN using a second wireless technology without retrying the signaling procedure with the first PLMN, in response to the signaling procedure being failed with a rejection cause indicating a network failure.

Other aspects and features of the present invention will become apparent to those with ordinarily skill in the art upon review of the following descriptions of specific embodiments of the mobile communication devices and the methods for recovering service from a signaling-procedure rejected with a network failure.

### BRIEF DESCRIPTION OF DRAWINGS

The invention can be more fully understood by reading the subsequent detailed description and examples with references made to the accompanying drawings, wherein:
Fig. 1 is a block diagram of a wireless communications environment according to an embodiment of the invention;
Fig. 2 is a block diagram illustrating the mobile communication device 110 according to an embodiment of the invention;
Fig. 3 is a flow chart illustrating the method for a mobile communication device to recover service from a signaling procedure rejected with network failure according to an embodiment of the invention; and
Fig. 4 is a flow chart illustrating the method for a mobile communication device to recover service from a signaling procedure rejected with network failure according to another embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. It should be understood that the embodiments may be realized in software, hardware, firmware, or any combination thereof.

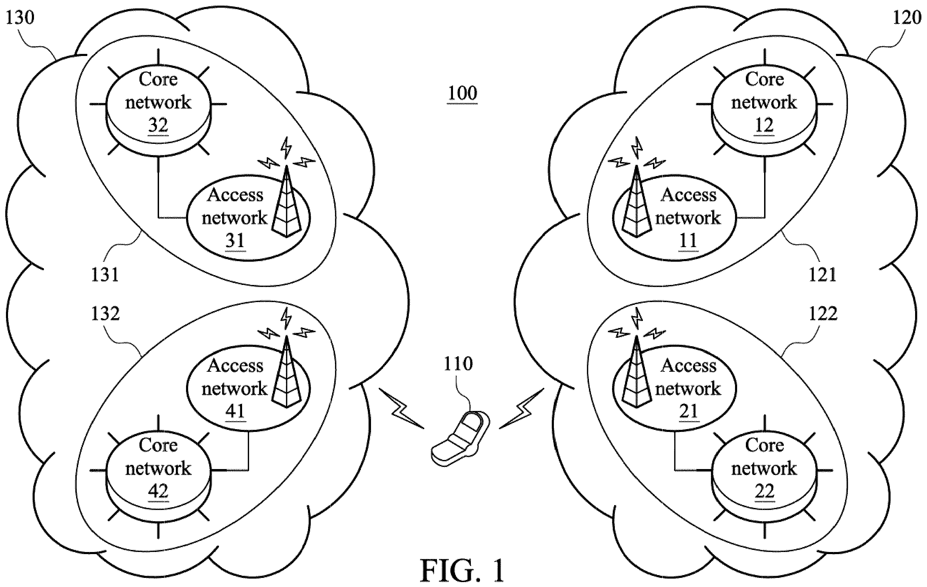

Fig. 1 is a block diagram of a wireless communications environment according to an embodiment of the invention. The wireless communications environment 100 comprises a mobile communication device 110 and two PLMNs 120 and 130, wherein the mobile communication device 110 may selectively camp on one of the PLMNs 120 and 130 to obtain wireless services. Each of the PLMNs 120 and 130 comprises at least two service networks utilizing different wireless technologies. Specifically, the PLMN 120 comprises the service networks 121 and 122, and the PLMN 130 comprises the service networks 131 and 132, wherein each of the service networks 121, 122, 131, and 132 comprises an access network and a core network.

For example, the PLMN 120 may be deployed by an operator A, and the service network 121 may be a Universal Mobile Telecommunications System (UMTS), wherein the access network 11 may be a Universal Terrestrial Radio Access Network (UTRAN) and the core network 12 may be a General Packet Radio Service (GPRS) core which includes a Home Location Register (HLR), at least one Serving GPRS Support Node (SGSN), and at least one Gateway GPRS Support Node (GGSN), while the service network 122 may be an LTE/LTE-Advanced system, the access network 21 may be an Evolved-UTRAN (E-UTRAN) and the core network 22 may be an Evolved Packet Core (EPC) which includes a Home Subscriber Server (HSS), Mobility Management Entity (MME), Serving Gateway (S-GW), and Packet Data Network Gateway (PDN-GW or P-GW).

The PLMN 130 may be deployed by an operator B, and the service network 131 may be a GPRS/EDGE system, wherein the access network 31 may be a Base Station Subsystem (BSS) and the core network 32 may be a GPRS core which includes an HLR, at least one SGSN, and at least one GGSN, while the service network 132 may be a UMTS, and the access network 41 may be a OUTRAN and the core network 42 may be a GPRS core which includes an HLR, at least one SGSN, and at least one GGSN.

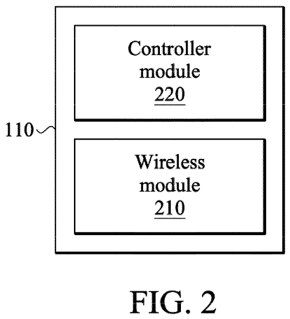

The mobile communication device 110 may be a smart phone, a panel Personal Computer (PC), a laptop computer, or any computing device supporting at least two of the wireless technologies utilized by the service networks 121 and 122 of the PLMN 120 and the service networks 131 and 132 of the PLMN 130. Fig. 2 is a block diagram illustrating the mobile communication device 110 according to an embodiment of the invention. The mobile communication device 110 comprises a wireless module 210 and a controller module 220. The wireless module 210 is responsible for performing the functionality of wireless transmissions and receptions to and from the service networks 121 and 122 of the PLMN 120 and the service networks 131 and 132 of the PLMN 130. The controller module 220 is responsible for controlling the operations of the wireless module 210, and other functional components (not shown), such as a display unit and/or keypad serving as the Man-Machine Interface (MMI), a storage unit storing the program codes of applications or communication protocols, or others. Also, the controller module 220 controls the wireless module 210 for performing the method for recovering service from a signaling procedure rejected with network failure.

To further clarify, the wireless module 210 may be a Radio Frequency (RF) unit (not shown), and the controller module 220 may be a general-purpose processor or a Micro Control Unit (MCU) of a baseband unit (not shown). The baseband unit may contain multiple hardware devices to perform baseband signal processing, including analog to digital conversion (ADC)/digital to analog conversion (DAC), gain adjusting, modulation/demodulation, encoding/decoding, and so on. The RF unit may receive RF wireless signals, convert the received RF wireless signals to baseband signals, which are processed by the baseband unit, or receive baseband signals from the baseband unit and convert the received baseband signals to RF wireless signals, which are later transmitted. The RF unit may also contain multiple hardware devices to perform radio frequency conversion. For example, the RF unit may comprise a mixer to multiply the baseband signals with a carrier oscillated in the radio frequency of the mobile communication system, wherein the radio frequency may be 900MHz, 1800MHz, or 1900MHz utilized in the GPRS/EDGE technology, 900MHz, 1900MHz, or 2100MHz utilized in the WCDMA technology, or 900MHz, 2100MHz, or 2.6GHz utilized in LTE/LTE-Advanced technology, or others depending on the wireless technology in use.

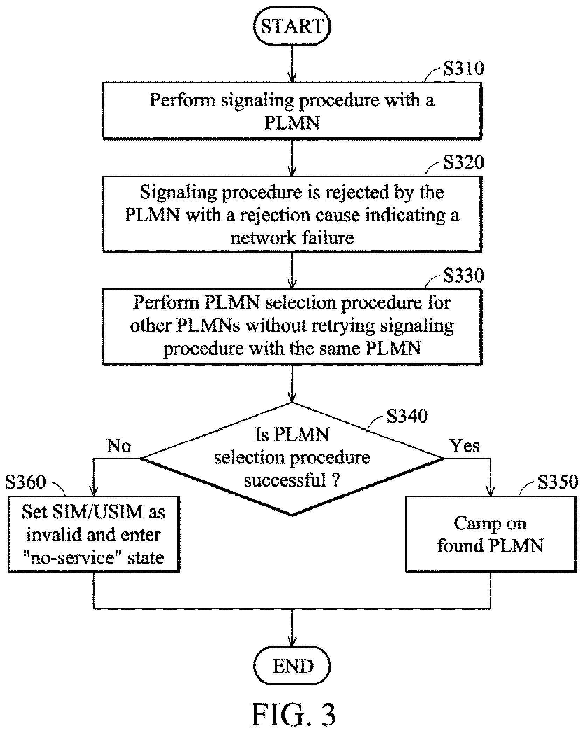

Fig. 3 is a flow chart illustrating the method for a mobile communication device to recover service from a signaling procedure rejected with network failure according to an embodiment of the invention. In this embodiment, the mobile communication device is initially camped on a PLMN. To begin, the mobile communication device performs a signaling procedure with the PLMN (step S310). Specifically, the signaling procedure may be an attach procedure, a location update procedure, a routing area update procedure, or a tracking area update procedure. Next, the signaling procedure is rejected by the PLMN with a rejection cause indicating a network failure (step S320). Specifically, the rejection cause may be included in an ATTACH REJECT message, a LOCATION UPDATE REJECT message, a ROUTING AREA UPDATE REJECT message, or a TRACKING AREA UPDATE REJECT message, and it is set to a value of 17 which means the signaling procedure is rejected with a network failure.

In response to the signaling procedure being rejected with a network failure, the mobile communication device performs a PLMN selection procedure for other PLMNs without retrying the signaling procedure with the PLMN (step S3330). Note that, the PLMN selection procedure is performed for the PLMNs other than the PLMN which the mobile communication device was camped on initially. That is, the PLMN selection procedure is performed for finding any suitable PLMN other than the one for which the signaling procedure was rejected. Subsequently, it is determined whether the PLMN selection procedure is successful to find another PLMN (step S340). If so, the mobile communication device camps on the found PLMN (step S350). Otherwise, if the PLMN selection procedure fails, the mobile communication device sets the Subscriber Identity Module (SIM) or Universal SIM (USIM), which is coupled to the mobile communication device, as invalid, and enters the "no-service" state (step S360).

Note that, unlike the conventional operation of UE, the mobile communication device in the embodiment of Fig. 3 does not retry the signaling procedure with the same PLMN and performs the PLMN selection procedure for other PLMNs in response to failure of the signaling procedure with a rejection cause indicating a network failure, so that it may camp on another PLMN to obtain wireless services as soon as possible.

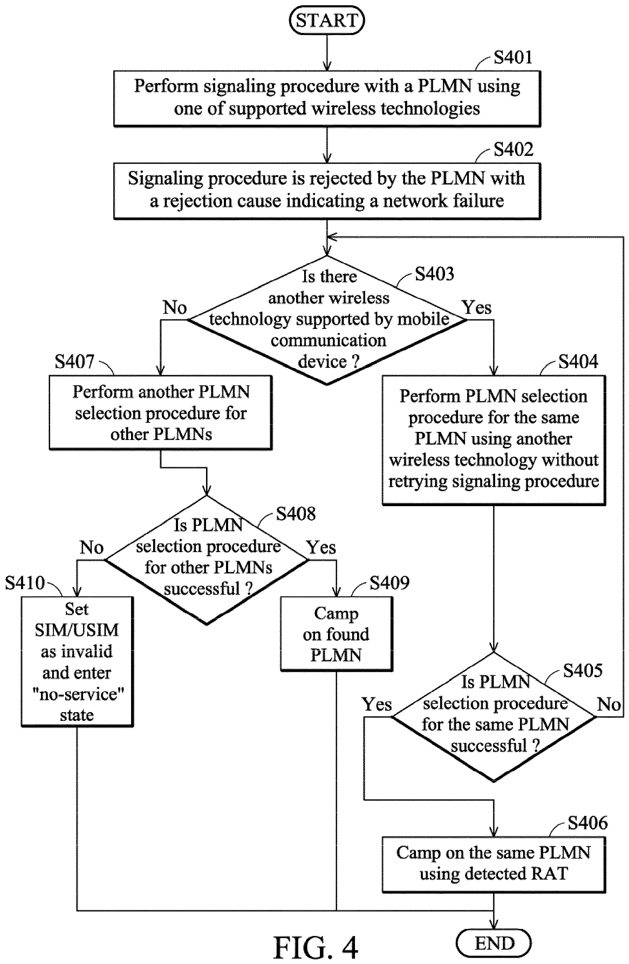

Fig. 4 is a flow chart illustrating the method for a mobile communication device to recover service from a signaling procedure rejected with network failure according to another embodiment of the invention. Similarly, the mobile communication device is initially camped on a PLMN. To begin, the mobile communication device performs a signaling procedure with the PLMN using one of the supported wireless technologies (step S401), and the signaling procedure is rejected by the PLMN with a rejection cause indicating a network failure (step S402). Specifically, the signaling procedure may be an attach procedure, a location update procedure, a routing area update procedure, or a tracking area update procedure. Next, it is determined whether there is another wireless technology supported by the mobile communication device (step S403). If so, the mobile communication device performs a PLMN selection procedure for the same PLMN using another wireless technology without retrying the signaling procedure using the same wireless technology (step S404).

After that, it is determined whether the PLMN selection procedure for the same PLMN is successful to detect another Radio Access Technology (RAT) utilized by the PLMN (step S405). If so, the mobile communication device camps on the same PLMN using the detected RAT (step S406). Specifically, the detected RAT is the same as the wireless technology used in the step S404. Otherwise, if the PLMN selection procedure for the same PLMN fails, the method proceeds to step S403. Subsequent to the step S403, if there is no other wireless technology supported by the mobile communication device (i.e., all of the supported wireless technologies have been tried), the mobile communication device performs another PLMN selection procedure for other PLMNs (step S407). Note that, the PLMN selection procedure in the step S407 is performed for the PLMNs other than the PLMN which the mobile communication device was camped on initially. That is, the PLMN selection procedure in the step S407 is performed for finding any suitable PLMN other than the one for which the signaling procedure was rejected. Next, it is determined whether the PLMN selection procedure is successful to find another PLMN (step S408). If so, the mobile communication device camps on the found PLMN (step S409). Otherwise, if the PLMN selection procedure fails, the mobile communication device sets the SIM/USIM, which is coupled to the mobile communication device, as invalid, and enters the "no-service" state (step S410).

Note that, unlike the conventional operation of UE, the mobile communication device in the embodiment of Fig. 4 does not retry the signaling procedure using the same wireless technology, and instead, it performs the PLMN selection procedure for the same PLMN using another wireless technology in response to failure of the signaling procedure with a rejection cause indicating a network failure, so that it may camp on the same PLMN with another RAT to obtain wireless services as soon as possible.

While the invention has been described by way of example and in terms of preferred embodiment, it is to be understood that the invention is not limited thereto. Those who are skilled in this technology can still make various alterations and modifications without departing from the scope of this invention. Therefore, the scope of the invention shall be defined and protected by the following claims and their equivalents.

## Claims

1. A mobile communication device (110), comprising:
a wireless module (210) adapted to perform wireless transmissions and receptions to and from a first Public Land Mobile Network, PLMN, ( 120) and a second PLMN (130); and
a controller module (220) adapted to perform a signaling procedure with the first PLMN (120) using a first wireless technology via the wireless module (210), wherein the signaling procedure is an attach procedure, a location update procedure, a routing area update procedure or a tracking area update procedure;
**characterized in that**:
the controller module (220) is furhter adapted to perform a PLMN selection procedure only for the first PLMN using a second wireless technology via the wireless module (210) without retrying the signaling procedure with the first PLMN (120) using the first wireless technology, in response to the signaling procedure being failed with a rejection cause indicating a network failure.

2. The mobile communication device of claim 1, wherein the controller module (220) is further adapted to perform another PLMN selection procedure for the second PLMN (130) via the wireless module (210), in response to failure of the PLMN selection procedure only for the first PLMN (120).

3. The mobile communication device of claim 1 or 2, wherein the controller module (220) is further adapted to set a Subscriber Identity Module, SIM, or a Universal SIM, USIM, coupled to the mobile communication device (110) as invalid, in response to failure of the PLMN selection procedure for the second PLMN (130).

4. The mobile communication device of any of the preceding claims, wherein the controller module (220) is furhter adapted to camp on the first PLMN (120) or the second PLMN (130) in response to success of the PLMN selection procedure.

5. The mobile communication device of any of the preceding claims, wherein the first wireless technology is one of a General Packet Radio Service, technology, an Enhanced Data rates for Global Evolution, EDGE, technology, a Wideband Code Division Multiple Access, WCDMA, technology, and a Long Term Evolution, LTE, technology, and the second wireless technology is another one of the GPRS technology, the EDGE technology, the WCDMA technology, and the LTE technology.

6. A method for a mobile communication device to recover service from a signaling procedure rejected with a network failure, comprising:
performing the signaling procedure with a first PLMNs(120) using a first wireless technology, wherein the signaling procedure is an attach procedure, a location update procedure, a routing area update procedure or a tracking area update procedure; and
**characterized by**:
performing a PLMN selection procedure only for the first PLMN (120) using a second wireless technology without retrying the signaling procedure with the first PLMN (120) using the first wireless technology, in response to the signaling procedure being failed with a rejection cause indicating a network failure.

7. The method of claim 6, further comprising:
performing another PLMN selection procedure for a second PLMN (130), in response to failure of the PLMN selection procedure only for the first PLMN (120).

8. The method of claim 6 or 7, further comprising:
setting a Subscriber Identity Module, SIM, or a Universal SIM, USIM, coupled to the mobile communication device (110) as invalid, in response to failure of the PLMN selection procedure for the second PLMN (130).

9. The method of any of 6 to 8, further comprising:
camping on the first PLMN (120) or the second PLMN (130) in response to success of the PLMN selection procedure.

10. The method of any of claims 6 to 9, wherein the first wireless technology is one of a General Packet Radio Service, GPRS, technology, an Enhanced Data rates for Global Evolution, EDGE, technology, a Wideband Code Division Multiple Access, WCDMA, technology, and a Long Term Evolution (LTE) technology, and the second wireless technology is another one of the GPRS technology, the EDGE technology, the WCDMA technology, and the LTE technology.

## Patentansprüche

1. Mobile Kommunikationseinrichtung, umfassend:
ein drahtloses Modul, das ausgelegt ist, um drahtlose Datenübertragungs- und Datenempfangsprozeduren zu und von einem ersten öffentlichen terrestrischen Mobilfunknetz, PLMN, (120) und einem zweiten PLMN (130) auszuführen; und
ein Steuerungsmodul (220), das ausgelegt ist, um eine Signalisierungsprozedur mit dem ersten PLMN (120) unter Verwendung einer ersten Funktechnologie über das drahtlose Modul (210) durchzuführen, wobei die Signalisierungsprozedur eine Anhängeprozedur, eine Orts-Aktualisierungsprozedur, eine Routingbereichs-Aktualisierungsprozedur oder eine Standortverfolgungsbereichs-Aktualisierungsprozedur ist;
**dadurch gekennzeichnet, dass:**
das Steuerungsmodul (220) ferner ausgelegt ist, um eine PLMN-Auswahlprozedur nur für das erste PLMN unter Verwendung einer zweiten Funktechnologie über das drahtlose Modul (210) durchzuführen, und zwar in Reaktion darauf, dass die Signalisierungsprozedur mit einer Ablehnungsursache fehlgeschlagen ist, was einen Netzwerkausfall anzeigt.

2. Mobile Kommunikationseinrichtung nach Anspruch 1, wobei das Steuerungsmodul (220) weiterhin ausgelegt ist, um eine weitere PLMN-Auswahlprozedur für das zweite PLMN (130) über das drahtlose Modul (210) in Reaktion auf einen Ausfall der PLMN-Auswahlprozedur nur für das erste PLMN (120) durchzuführen.

3. Mobile Kommunikationseinrichtung nach Anspruch 1 oder 2, wobei das Steuerungsmodul (220) ferner ausgelegt ist, um ein Teilnehmeridentitätsmodul, SIM, oder eine Universal-SIM, USIM, als ungültig einzustellen, das mit der mobilen Kommunikationseinrichtung (110) gekoppelt ist, in Reaktion auf einen Ausfall der PLMN-Auswahlprozedur für das zweite PLMN (130).

4. Mobile Kommunikationseinrichtung nach einem der vorhergehenden Ansprüche, wobei das Steuerungsmodul (220) weiter ausgelegt ist, um auf dem ersten PLMN (120) oder dem zweiten PLMN (130) in Reaktion auf den Erfolg der PLMN-Auswahlprozedur rufbereit zu sein.

5. Mobile Kommunikationseinrichtung nach einem der vorhergehenden Ansprüche, wobei die erste Funktechnologie eine General Packet Radio Service, GPRS, Technologie, eine Enhanced Data rates for Global Evolution Technologie, EDGE, eine Breitband-Codemultiplex-Technologie, WCDMA, oder eine Long Term Evolution Technologie, LTE, ist und wobei die zweite Funktechnologie ist eine weitere GPRS-Technologie, EDGE-Technologie, WCDMA-Technologie oder LTE-Technologie ist.

6. Verfahren für eine mobile Kommunikationseinrichtung zur Dienstwiederherstellung von einer mit einem Netzausfall zurückgewiesenen Signalisierungsprozedur, umfassend:
Durchführen der Signalisierungsprozedur mit einem ersten PLMN (120) unter Verwendung einer ersten Funktechnologie, wobei die Signalisierungsprozedur eine Anhängeprozedur, eine Orts-Aktualisierungsprozedur, eine Routingbereichs-Aktualisierungsprozedur oder eine Standortverfolgungsbereichs-Aktualisierungsprozedur ist; und
**gekennzeichnet durch**:
Durchführen einer PLMN-Auswahlprozedur nur für das erste PLMN (120) unter Verwendung einer zweiten Funktechnologie ohne Wiederaufruf der ersten Signalisierungsprozedur mit dem ersten PLMN (120) unter Verwendung der ersten Funktechnologie, und zwar in Reaktion darauf, dass die Signalisierungsprozedur mit einer Ablehnungsursache fehlgeschlagen ist, was einen Netzwerkausfall anzeigt

7. Verfahren nach Anspruch 6, weiterhin umfassend:
Durchführen einer weiteren PLMN-Auswahlprozedur für ein zweites PLMN (130) in Reaktion auf einen Ausfall der PLMN-Auswahlprozedur nur für das erste PLMN (120).

8. Verfahren nach Anspruch 6 oder 7, weiterhin umfassend:
Einstellen eines Teilnehmeridentitätsmoduls, SIM, oder eine Universal-SIM, USIM, als ungültig, das mit der mobilen Kommunikationseinrichtung (110) gekoppelt ist, in Reaktion auf einen Ausfall der PLMN-Auswahlprozedur für das zweite PLMN (130).

9. Verfahren nach einem der Ansprüche 6 bis 8, weiterhin umfassend:
Durchführen einer Rufbereitschaft auf dem ersten PLMN (120) oder auf dem zweiten PLMN (130) in Reaktion auf den Erfolg der PLMN-Auswahlprozedur.

10. Verfahren nach einem der Ansprüche 6 bis 9, wobei die erste Funktechnologie eine General Packet Radio Service, GPRS, Technologie, eine Enhanced Data rates for Global Evolution Technologie, EDGE, eine Breitband- Codemultiplex-Technologie, WCDMA, oder eine Long Term Evolution Technologie, LTE, ist und wobei die zweite Funktechnologie ist eine weitere GPRS-Technologie, EDGE-Technologie, WCDMA-Technologie oder LTE-Technologie ist.

## Revendications

1. Un dispositif de communication mobile (110), comprenant:
un module sans fil (210) adapté pour effectuer des transmissions et des réceptions sans fil à destination et en provenance d'un premier réseau mobile terrestre public, PLMN, (120) et d'un second PLMN (130); et
un module de contrôleur (220) adapté pour effectuer une procédure de signalisation avec le premier PLMN (120) en utilisant une première technologie sans fil via le module sans fil (210), dans lequel la procédure de signalisation est une procédure d'attachement, une procédure de mise à jour de position, une procédure de mise à jour d'air de routage ou une procédure de mise à jour aire de suivi ;
**caractérisé en ce que** :
le module de contrôleur (220) est en outre adapté pour effectuer une procédure de sélection PLMN uniquement pour le premier PLMN en utilisant une seconde technologie sans fil via le module sans fil (210) sans réessayer la procédure de signalisation avec le premier PLMN (120) en utilisant la première technologie sans fil, en réponse à l'échec de la procédure de signalisation avec une cause de rejet indiquant une panne de réseau.

2. Le dispositif de communication mobile de la revendication 1, dans lequel le module de contrôleur (220) est en outre adapté pour effectuer une autre procédure de sélection PLMN pour le second PLMN (130) via le module sans fil (210), en réponse à l'échec de la procédure de sélection PLMN uniquement pour premier PLMN (120).

3. Le dispositif de communication mobile de la revendication 1 ou 2, dans lequel le module de contrôleur (220) est en outre adapté pour définir un Module d'Identification d'abonné, SIM, ou un SIM Universel, USIM, couplé au dispositif de communication mobile (110) comme étant invalide, en réponse à un échec de la procédure de sélection PLMN pour le second PLMN (130).

4. Le dispositif de communication mobile de l'une quelconque des revendications précédentes, dans lequel le module de contrôleur (220) est en outre adapté pour se positionner sur le premier PLMN (120) ou sur le second PLMN (130) en réponse à un succès de la procédure de sélection PLMN.

5. Le dispositif de communication mobile de l'une quelconque des revendications précédentes, dans lequel la première technologie sans fil est l'une des suivantes :
une technologie *General Packet Radio Service,* GPRS, une technologie *Enhanced Data rates for Global Evolution,* EDGE, une technologie d'accès Multiple par division de code à large bande, WCDMA, et une technologie *Long Term Evolution,* LTE, et la seconde technologie sans fil est une autre parmi les technologies GPRS, EDGE, WCDMA et LTE.

6. Un procédé pour permettre à un dispositif de communication mobile de récupérer un service à partir d'une procédure de signalisation rejetée avec une panne réseau, comprenant :
l'exécution de la procédure de signalisation avec un premier PLMN (120) en utilisant une première technologie sans fil, dans laquelle la procédure de signalisation est une procédure d'attachement, une procédure de mise à jour de position, une procédure de mise à jour d'aire de routage ou une procédure de mise à jour d'aire de suivi ; et
**caractérisé par** :
la mise en oeuvre d'une procédure de sélection PLMN uniquement pour le premier PLMN (120) en utilisant une seconde technologie sans fil sas ré-essayer la procédure de signalisation avec le premier PLMN (120) en utilisant la première technologie sans fil, en réponse à un échec de la procédure de signalisation avec une cause de rejet indiquant une défaillance du réseau.

7. Le procédé de la revendication 6, comprenant en outre :
la mise en oeuvre d'une autre procédure de sélection PLMN pour un second PLMN (130), en réponse à un échec de la procédure de sélection PLMN uniquement pour le premier PLMN (120).

8. Le procédé de l'une quelconque des revendications 6 ou 7, comprenant en outre:
la définition d'un module d'identité d'abonné (SIM) ou d'une carte SIM universelle (USIM) couplée au dispositif de communication mobile (110) comme invalide en réponse à une défaillance de la procédure de sélection PLMN pour le deuxième PLMN.

9. Le procédé de l'une quelconque des revendications 6 à 8, comprenant en outre:
le positionnement sur le premier PLMN ou le second PLMN en réponse au succès de la procédure de sélection PLMN.

10. Le procédé de l'une quelconque des revendications 6 à 9, dans lequel dans lequel la première technologie sans fil est l'une des suivantes : une technologie *General Packet Radio Service,* GPRS, une technologie *Enhanced Data rates for Global Evolution,* EDGE, une technologie d'accès Multiple par division de code à large bande, WCDMA, et une technologie *Long Term Evolution,* LTE, et ta seconde technologie sans fil est une autre parmi les technologies GPRS, EDGE, WCDMA et LTE.
